# EUROPÄISCHE PATENTSCHRIFT

(11) **EP 3 107 386 B1**
(45) Veröffentlichungstag und Bekanntmachung des Hinweises auf die Patenterteilung: **11.04.2018**
(21) Anmeldenummer: 15705504.7
(22) Anmeldetag: 19.02.2015
(51) Int. Cl.: A01N 25/30, A01N 37/40, A01N 39/04, A01N 41/10, A01N 57/20

(54) **SCHAUMARME AGROCHEMISCHE ZUSAMMENSETZUNGEN**
LOW FOAMING AGROCHEMICAL COMPOSITIONS
COMPOSITIONS AGROCHIMIQUES FAIBLEMENT MOUSSANTES

(30) Priorität: 19.02.2014 DE 102014203032; 30.04.2014 DE 102014208244
(43) Veröffentlichungstag der Anmeldung: 28.12.2016
(73) Patentinhaber: Clariant International Ltd, 4132 Muttenz (CH)
(72) Erfinder: BAUR, Peter, 86938 Schondorf (DE); KLUG, Peter, 63762 Großostheim (DE); WOLF, Stefanie, 65929 Frankfurt am Main (DE)
(74) Vertreter: Paczkowski, Marcus
(86) Internationale Anmeldenummer: PCT/EP2015/000371
(87) Internationale Veröffentlichungsnummer: WO 2015/124303

(56) Entgegenhaltungen:
- WO-A1-96/16540
- WO-A1-2014/067663

## Beschreibung

Die Erfindung betrifft wässrige agrochemische Zusammensetzungen, die ein oder mehrere N-Alkylglucamide und Entschäumer enthalten, die Verwendung der Entschäumer in N-Alkylglucamiden enthaltenden Zusammensetzungen sowie Verfahren zur Bekämpfung von Schadorganismen durch Applikation der genannten Zusammensetzung.

Pestizide (vor allem Herbizide, Fungizide und Insektizide) als agrochemische Wirkstoffe sind chemische Substanzen, synthetisch hergestellt oder natürlichen Ursprungs, die in Pflanzenzellen, -gewebe oder in parasitäre Organismen in oder auf der Pflanze eindringen und diese schädigen und/oder zerstören. Den größten Anteil an diesen Substanzen stellen Herbizide dar. Pestizid-Zusammensetzungen werden üblicherweise in Form von flüssigen oder festen konzentrierten Zubereitungen (Formulierungen) in der Landwirtschaft eingesetzt. Die erleichtern dem Anwender so die Handhabung oder sorgen für eine höhere Wirksamkeit des Wirkstoffs. Die Formulierungen werden üblicherweise vor dem Einsatz mit Wasser verdünnt und anschließend durch Sprühapplikation ausgebracht.

Wasserlösliche Konzentrate (Soluble Liquids, abgekürzt mit SL) sind eine besonders wichtige Form der Zubereitungen von Pestizid-Zusammensetzungen. Sie spielen insbesondere bei Herbiziden eine große Rolle, wobei die Wirkstoffe oftmals als wasserlösliche Salze, die durch Neutralisation der Säureform der Herbizide mit geeigneten Basen in ihre Alkali- oder Ammoniumsalze überführt werden, eingesetzt werden.

Eine besonders wichtige Rolle spielen die wasserlöslichen Salze von Herbiziden, wie beispielsweise des Glyphosats, Glufosinats oder der Auxin-Herbizide wie 2,4-D oder Dicamba. Sie werden vorzugsweise als Alkalimetallsalz oder in Form verschiedener Ammoniumsalze bzw. als Gemisch dieser Salze meistens als wässrige Formulierungen verwendet.

Weitere bekannte Formen agrochemischer Wirkstoffe sind Pflanzennährstoffe, Pflanzenstärkungsmittel und Pflanzenwachsregulatoren.

Ein generelles Problem bei der Anwendung von agrochemischen Wirkstoffen ist, dass nur ein Bruchteil des Wirkstoffes die gewünschte Aktivität entfaltet. Der größere Teil geht oft ungenutzt verloren, indem der Wirkstoff bei der Ausbringung der Spritzbrühe nicht die Blätter oder die Wurzeln der Pflanze erreicht, sondern ungenutzt im Boden versickert, durch Regen abgewaschen oder von der Pflanze nicht aufgenommen wird.

Dieser ökologische und ökonomische Nachteil kann durch Zugabe von Hilfsstoffen, im Rahmen der vorliegenden Anmeldung als "Adjuvants" bezeichnet, zu agrochemischen Wirkstoff-Zusammensetzungen reduziert werden. Diese Hilfsstoffe können beispielsweise den Spray-Drift reduzieren, die Benetzung der Pflanze verbessern oder dafür sorgen, dass der Wirkstoff länger auf der Pflanzenoberfläche haftet bzw. besser aufgenommen wird. Insbesondere bei wasserlöslichen Pestiziden, wie beispielsweise bei Glyphosat haben die Art sowie die Menge der verwendeten Adjuvants einen entscheidenden Einfluss auf die Wirksamkeit der Formulierung.

Die mit Abstand am häufigsten verwendeten Adjuvants in wässrigen HerbizidFormulierungen sind Fettaminethoxylate, hauptsächlich Talgfettaminethoxylate. Diese Produkte sind jedoch aufgrund ihrer toxischen und ökotoxikologischen Eigenschaften, wie der starken Augenreizung oder der Toxizität gegenüber aquatischen Organismen als bedenklich einzustufen und werden zunehmend durch Adjuvants mit einem besseren toxikologischen und ökotoxikologischen Profil ersetzt.

Die Verwendung von zuckerbasierenden Tensiden, wie Alkyl-N-methylglucosamiden, beispielsweise in Reinigungsmitteln und kosmetischen Produkten ist in der Literatur beschrieben (F.W. Lichtenthaler, "Carbohydrates as Organic Raw Materials" in Ullmann's Ullmann's Encyclopedia of Industrial Chemistry, Wiley-VCH Verlag, 2010).

WO 96/16540 beschreibt Pestizidzusammensetzungen, die langkettige Alkylamide, die einen Polyhydroxycarbonyl-Substituenten mit mindestens drei Hydroxyl-Gruppen am Amidstickstoff tragen. In den Beispielen werden Emulsionskonzentrate, wasserdispergierbare Pulver und Granulate von Dodecyl-N-methylglucamid, Dodecyltetradecyl-N-methylglucamid und Cetylstearyl-N-methylglucamid beschrieben. In den Beispielen 6 und 7 enthält die Zusammensetzung zusätzlich einen Entschäumer.

Entschäumer auf Silikonbasis sind bekannt. Sie weisen jedoch teilweise anwendungstechnische Nachteile auf, die ihren Einsatz für Formulierungen wässriger Lösungen von polaren Pflanzenschutzmittelwirkstoffen, insbesondere salzartigen Wirkstoffe wie Glufosinat-ammonium, wenig geeignet erscheinen lassen. So sind einige Entschäumer in den wässrigen Formulierungen schlecht löslich und scheiden sich in Form von Eintrübungen, Ausflockungen oder Phasentrennungen ab. Weitere Entschäumer dieser Art zeigen nach Lagerung der Formulierung bei Raumtemperatur oder bei erhöhter Temperatur bis beispielsweise 50 C keine ausreichende Entschäumerwirkung mehr.

Die WO 2005/117580 beschreibt Entschäumer für Pflanzenschutzmittel auf Silikonbasis. In der EP-A-0407874 sind dagegen zahlreiche Beispiele für bekannte Entschäumer auf Silikonbasis erwähnt, die keine oder nur wenig brauchbare Eigenschaften als Entschäumer für wässrige Pflanzenschutzmittel von salzartigen Wirkstoffen aufweisen.

Es stellte sich somit die Aufgabe, weiter Adjuvants und Adjuvantkombinationen für den Einsatz in wässrigen agrochemischen Zusammensetzungen zur Verfügung zu stellen, die hochwirksam sind, sich durch ein vorteilhaftes toxikologisches und ökologisches Profil auszeichnen, aus anwendungstechnischer Sicht vorteilhafte Eigenschaften aufweisen und insbesondere eine geringe Schaumbildung zeigen.

Die Aufgabe wird gelöst durch eine Kombination von kürzerkettigen N-Alkylglucamiden und bestimmten silikonhaltigen Entschäumern.

Gegenstand der Erfindung sind daher wässrige agrochemische Zusammensetzungen, enthaltend
(a) einen oder mehrere in Wasser lösliche agrochemische Wirkstoffe,
(b) ein oder mehrere Alkylglucamide der Formel (I), 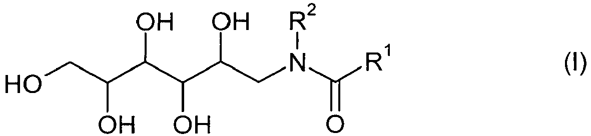 worin
   - R1: für eine lineare oder verzweigte Alkylgruppe mit 5 bis 9 Kohlenstoffatomen steht und
   - R2: für eine Alkylgruppe mit 1 bis 3 Kohlenstoffatomen steht,
(c) einen oder mehrere Entschäumer auf Silikonbasis aus der Gruppe der linearen Polydimethylsiloxane und
(d) Wasser,
   wobei für den Entschäumer c) das Verhältnis von dynamischer Oberflächenspannung (DYOS in [mN/m]) bei einer Konzentration von 2,0 g/l und einem Oberflächenalter von 20 Millisekunden (ms) in 20 gew.-%igem wässrigen Propylenglykol zu der dynamischen Oberflächenspannung bei gleichen Bedingungen in 20 gew.-%igem wässrigen Dipropylenglykol größer 1,10 ist und das Verhältnis der dynamischen Oberflächenspannung bei einer Konzentration von 2,0 g/l und einem Oberflächenalter von 20 ms in 20 gew.-%igem wässrigen Propylenglykol zu der dynamischen Oberflächenspannung bei einer Konzentration von 10,0 g/l und einem Oberflächenalter von 20 ms in Wasser größer als 1,10 ist.

Weiterhin Gegenstand der Erfindung ist eine Adjuvant-Zusammensetzung, die frei ist von agrochemischen Wirkstoffen, enthaltend
A) ein oder mehrere erfindungsgemäße Glucamide der Formel (I) und
B) einen oder mehrere erfindungsgemäße Entschäumer auf Silikonbasis.

Ebenso Gegenstand der Erfindung ist ein Verfahren zum Schutz von Pflanzen vor Schadorganismen, dadurch gekennzeichnet, dass man die zu schützenden Pflanzen, die Schadorganismen und/oder deren Lebensraum mit einer erfindungsgemäßen agrochemischen Wirkstoff-Zusammensetzung in Kontakt bringt.

Ebenso Gegenstand der Erfindung ist ein Verfahren zur Bekämpfung von unerwünschtem Pflanzenwuchs, dadurch gekennzeichnet, dass man eine wirksame Menge einer erfindungsgemäßen agrochemischen Wirkstoff-Zusammensetzung auf die Pflanzen, Pflanzenteile oder die Anbaufläche appliziert.

Weiterhin Gegenstand der Erfindung ist die Verwendung eines erfindungsgemäßen Entschäumers auf Silikonbasis aus der Gruppe der linearen Polydimethylsiloxane als Entschäumer für wässrige Formulierungen von wasserlöslichen agrochemischen Wirkstoffen mit einem Gehalt an erfindungsgemäßen Alkylglucamiden der Formel (I).

Die erfindungsgemäßen Zusammensetzungen zeigen neben hoher biologischer Wirksamkeit hervorragende anwendungstechnische Eigenschaften und insbesondere eine geringe Tendenz zur Schaumbildung.

Der Begriff "wässrige agrochemische Zusammensetzung" (erfindungsgemäße Zusammensetzung) umfasst "wässrige agrochemische Wirkstoff-Zusammensetzungen" (erfindungsgemäße Wirkstoff-Zusammensetzungen) und wirkstofffreie, wässrige agrochemische Adjuvant-Zusammensetzungen (erfindungsgemäße Adjuvant-Zusammensetzungen).

Der Begriff "agrochemischer Wirkstoff' umfasst Pestizide, Pflanzennährstoffe (Dünger), Pflanzenstärkungsmittel und Pflanzenwachstumsregulatoren, auch in den entsprechenden Zusammensetzungen.

Bevorzugt als agrochemische Wirkstoffe sind Pestizide und Pflanzennährstoffe, insbesondere Pestizide.

Der Begriff "Zusammensetzung" umfasst dabei sowohl die konzentrierte Form (Formulierung) als auch die verdünnte Form (Spritzbrühe).

Unter wasserlöslichen agrochemischen Wirkstoffen, insbesondere Pestiziden, im Sinne der Erfindung sind agrochemische Wirkstoffe, insbesondere Pestizide, zu verstehen, die bei Raumtemperatur (25 °C) eine Löslichkeit von mehr 50 g/l und vorzugsweise mehr als 100 g/l in Wasser aufweisen. Besonders bevorzugt sind agrochemische Wirkstoffe, insbesondere Pestizide, die bei der Einsatzkonzentration bei 25 °C eine Löslichkeit von mindestens 90 Gew.-% aufweisen.

Als Beispiele für Pflanzennährstoffe als agrochemische Wirkstoffe seien übliche anorganische oder organische Dünger zur Versorgung von Pflanzen mit Makro- und/oder Mikronährstoffen genannt.

Als Beispiele für Pflanzenwuchsregulatoren als agrochemische Wirkstoffe seien ferner natürliche Pflanzenhormone wie Abszissinsäure, Jasmonsäure, Salicylsäure und deren Ester, Kinetin und Brassinosteroide genannt.

Weiter seien agrochemische Wirkstoffe genannt, die als Pflanzenwuchsregulatoren und/oder Pflanzenstärkungsmittel wirken können, um den Einfluss von Stressfaktoren wie Hitze, Kälte, Trockenheit, Salz, Sauerstoffmangel bzw.- Überschwemmung auf das Pflanzenwachstum zu mindern. Hier seien beispielhaft Glycinbetain (Betain), Cholin, Kaliumphosphat oder andere Phosphatsalze, sowie Silikate genannt.

Vorzugsweise genannt seien als Pestizide Fungizide, Bakterizide, Insektizide, Akarizide, Nematizide, Herbizide und Repellents.

Als wasserlösliche Pestizide (Komponente a) sind bevorzugt Acifluorfen, Aminopyralid, Amitrol, Asulam, Benazolin, Bentazon, Bialaphos, Bicyclopyron, Bispyribac, Bromacil, Bromoxynil, , Chloramben, Clopyralid, 2,4-D, 2,4-DB, Dicamba, Dichlorprop, Dichlorprop-P, Difenzoquat, Diquat, Endothal, Fenoxaprop, Fenoxaprop-P, Flamprop, Florasulam, Flumiclorac, Fluoroglycofen, Fluroxypyr, Fomesafen, Fosamine, Glufosinat, Glufosinat-P, Glyphosat, Imazameth, Imazamethabenz, Imazamox, Imazapic, Imazapyr, Imazaquin, Imazethapyr, MCPA, MCPB, Mecoprop, Mesotrione, Nicosulfuron, Octansäure, Pelargonsäure, Picloram, Quizalofop, Quizalofop-P, 2,3,6-TBA, Sulcotrione, Tembotrione und Triclopyr zu nennen, bevorzugt jeweils in Form ihrer wasserlöslichen Salze.

Bevorzugte Salze sind dabei z. B. Acifluorfen-Natrium, Bialafos-Natrium, Bispyridac-Natrium, Glufosinat-Ammonium, Glufosinat-P-Ammonium, Glufosinat-P-Natrium, Glyphosat-Isopropylammonium, Glyphosat-Trimesium, Imazamox-Ammonium, Imazapyr-Isopropylammonium, Imazaquinammonium, Imazethapyr-Ammonium, MCPB-Natrium, Mecocrop-Natrium, Mecocrop-P-Dimethylammonium und Mecocrop-P-kalium..

Besonders bevorzugt sind die wasserlöslichen Salze von 2,4-D, Bentazon, Dicamba, Fomesafen, Glyphosat, Glufosinat, MCPA und Paraquat. Außerordentlich bevorzugt sind die wasserlöslichen Salze von Glyphosat.

Unter den wasserlöslichen Salzen sind jeweils insbesondere die Alkali- und Ammoniumsalze und unter diesen wiederum die Kalium-, Ammonium-, Dimethylammonium-, iso-Propylammonium- und die (2-Hydroxyethyl)trimethylammoniumsalze bevorzugt.

Bei den wasserlöslichen Pestiziden der Komponente a) kann es sich auch um eine Kombination von zwei oder von mehreren Pestiziden, insbesondere der oben genannten bevorzugten Pestizide, handeln. Solche Kombinationen sind insbesondere dann von Bedeutung, wenn es beispielsweise darum geht, das Wirkungsspektrum der Pestizid-Zusammensetzung zu verbreitern oder Resistenzen gegenüber bestimmten Pestiziden besser zu unterbinden.

In einer weiteren Ausführungsform der Erfindung enthalten die erfindungsgemäßen Wirkstoff-Zusammensetzungen daher mindestens zwei wasserlösliche Wirkstoffe der Komponente a).

Bevorzugt sind die mindestens zwei wasserlöslichen Wirkstoffe ausgewählt aus Glyphosat, Glufosinat, 2,4-D, Dicamba und Fomesafen.

Besonders bevorzugte Zusammensetzungen sind dabei solche, bei denen es sich bei den wasserlöslichen Wirkstoffen der Komponente a) um die Kombinationen der zwei Herbizide Glyphosat und 2,4-D, Glyphosat und Dicamba, Glyphosat und Fomesafen, Glyfosat und Glufosinat, 2,4-D und Dicamba, Glufosinat und 2,4-D sowie Glufosinat und Dicamba handelt.

Die erfindungsgemäßen Zusammensetzungen können daneben, in der Formulierung oder auch der Spritzbrühe, weitere Pestizide enthalten, die gelöst oder auch dispergiert vorliegen können.

Im Folgenden werden weiter Beispiele für Pestizide genannt, die gelöst als Komponente a) vorliegen oder Kombinationspartner von Pestiziden der Komponente a) bilden können.

### Als Beispiele für Herbizide seien genannt:

Wirkstoffe, die auf einer Inhibition von beispielsweise Acetolaktat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z. B. aus Weed Research 26 (1986) 441 445 oder "The Pesticide Manual", 16th edition, The British Crop Protection Council and the Royal Soc. of Chemistry, 2012 und dort zitierter Literatur beschrieben sind. Als bekannte Herbizide oder Pflanzenwachstumsregulatoren, die mit den erfindungsgemäßen Verbindungen kombiniert werden können, sind z. B. folgende Wirkstoffe zu nennen (die Verbindungen sind entweder mit dem "common name" nach der International Organization for Standardization (ISO) oder mit dem chemischen Namen oder mit der Codenummer bezeichnet) und umfassen stets sämtliche Anwendungsformen wie Säuren, Salze, Ester und Isomere wie Stereoisomere und optische Isomere. Dabei sind beispielhaft eine und zum Teil auch mehrere Anwendungsformen genannt:
Acetochlor, Acibenzolar, Acibenzolar-S-methyl, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlorkalium, Aminocyclopyrachlormethyl, Amitrole, Ammoniumsulfamat, Ancymidol, Anilofos, Atrazine, Aviglycin, Azafenidin, Azimsulfuron, Aziprotryn, Beflubutamid, Benazolinethyl, Bencarbazone, Benfluralin, Benfuresate, Bensulide, Bensulfuron, Bensulfuronmethyl, Benzfendizone, Benzobicyclon, Benzofenap, Benzofluor, Benzoylprop, Benzyladenin, Bifenox, Bromobutide, Bromofenoxim, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazoneethyl, Carvone, Chlorcholinchlorid, Chlomethoxyfen, Chlorazifop, Chlorazifopbutyl, Chlorbromuron, Chlorbufam, Chlorfenac, Chlorfenacnatrium, Chlorfenprop, Chlorflurenol, Chlorflurenol-methyl, Chloridazon, Chlorimuron, Chlorimuronethyl, Chlormequatchlorid, Chlornitrofen, 4-Chlorophenoxyacetic acid, Chlorophthalim, Chlorpropham, Chlorthaldimethyl, Chlorotoluron, Chlorsulfuron, Cinidon, Cinidonethyl, Cinmethylin, Cinosulfuron, Clethodim, Clodinafop, Clodinafoppropargyl, Clofencet, Clomazone, Clomeprop, Cloprop, Cloransulam, Cloransulammethyl, Cloxyfonac, Cumyluron, Cyanamide, Cyanazine, Cyclanilide, Cycloate, Cyclosulfamuron, Cycloxydim, Cycluron, Cyhalofop, Cyhalofopbutyl, Cyperquat, Cyprazine, Cyprazole, Cytokinine, Daimuron/Dymron, Dalapon, Daminozide, Dazomet, n-Decanol, Desmedipham, Desmetryn, Detosyl-Pyrazolate (DTP), Diallate, Diaminozid, Dichlobenil, Diclofop, Diclofopmethyl, Diclofop-P-methyl, Diclosulam, Diethatyl, Diethatylethyl, Difenoxuron, Diflufenican, Diflufenzopyr, Diflufenzopyrnatrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquatdibromide, Dithiopyr, Diuron, DNOC, Eglinazineethyl, EPTC, Esprocarb, Ethalfluralin, Ethametsulfuron, Ethametsulfuronmethyl, Ethylnaphthylacetat, Ethephon, Ethidimuron, Ethiozin, Ethofumesate, Ethoxyfen, Ethoxyfenethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxapropethyl, Fenoxaprop-P-ethyl, Fenoxasulfone, Fentrazamide, Fenuron, Flamprop-M-isopropyl, Flamprop-M-methyl, Flazasulfuron, Fluazifop, Fluazifop-P, Fluazifopbutyl, Fluazifop-P-butyl, Fluazolate, Flucarbazone, Flucarbazonesodium, Flucetosulfuron, Fluchloralin, Flufenacet (Thiafluamide), Flufenpyr, Flufenpyrethyl, Flumetralin, Flumetsulam, Flumicloracpentyl, Flumioxazin, Flumipropyn, Fluometuron, Fluorodifen, Fluoroglycofenethyl, Flupoxam, Flupropacil, Flupropanate, Flupyrsulfuron, Flupyrsulfuronmethylsodium, Flurenol, Flurenol-butyl, Fluridone, Flurochloridone, Fluroxypyr-meptyl, Flurprimidol, Flurtamone, Fluthiacet, Fluthiacetmethyl, Fluthiamide, Foramsulfuron, Forchlorfenuron, Furyloxyfen, Gibberellinsäure, H-9201, d. h. O-(2,4-Dimethyl-6-nitrophenyl)-O-ethylisopropylphosphor amidothioat, Halosafen, Halosulfuron, Halosulfuronmethyl, Haloxyfop, Haloxyfop-P, Haloxyfopethoxyethyl, Haloxyfop-P-ethoxyethyl, Haloxyfopmethyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenzmethyl, Imazosulfuron, Inabenfide, Indanofan, Indaziflam, Indolessigsäure (IAA), 4-Indol-3-ylbuttersäure (IBA), lodosulfuron, lodosulfuronmethyl-natrium, lofensulfuron, lofensulfuronnatrium, loxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPB-methyl, -ethyl Mecopropbutotyl, Mecoprop-P-butotyl, Mecoprop-P-2-ethylhexyl, Mefenacet, Mefluidide, Mepiquat-chlorid, Mesosulfuron, Mesosulfuronmethyl, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuronmethyl, Molinate, Monalide, Monocarbamide, Monocarbamidedihydrogensulfat, Monolinuron, Monosulfuron, Monosulfuronester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d.h. 4-(2,4-Dichlorobenzoyl)-1-methyl-5-benzyloxypyrazole, Neburon, Nipyraclofen, Nitralin, Nitrofen, Nitroguaiacolate, Nitrophenolat-natrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquatdichlorid, Pendimethalin, Pendralin, Penoxsulam, Pentanochlor, Pentoxazone, Perfluidone, Pethoxamid, Phenisopham, Phenmedipham, Phenmediphamethyl, Picolinafen, Pinoxaden, Piperophos, Pirifenop, Pirifenopbutyl, Pretilachlor, Primisulfuron, Primisulfuronmethyl, Probenazole, Profluazol, Procyazine, Prodiamine, Prifluraline, Profoxydim, Prohexadione, Prohexadionecalcium, Prohydrojasmone, Prometon, Prometryn, Propachlor, Propanil, Propaquizafop, Propazine, Propham, Propisochlor, Propoxycarbazone, Propoxycarbazonenatrium, Propyrisulfuron, Propyzamide, Prosulfalin, Prosulfocarb, Prosulfuron, Prynachlor, Pyraclonil, Pyraflufen, Pyraflufenethyl, Pyrasulfotole, Pyrazolynate (Pyrazolate), Pyrazosulfuron, Pyrazosulfuronethyl, Pyrazoxyfen, Pyribambenz, Pyribambenzisopropyl, Pyribambenzpropyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofop, Quizalofopethyl, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulfallate (CDEC), Sulfentrazone, Sulfometuron, Sulfometuron-methyl, Sulfo-sulfuron, SW-065, SYN-523, SYP-249, d.h. 1-Ethoxy-3-methyl-1-oxobut-3-en-2-yl-5-[2-chlor-4-(trifluormethyl)phenoxy]-2-n itrobenzoat, SYP-300, d.h. 1-[7-Fluor-3-oxo-4-(prop-2-in-1-yl)-3,4-dihydro-2H-1,4-benzoxazin-6-yl]-3-propyl-2-thioxoimidazolidin-4,5-dion, Tebutam, Tebuthiuron, Tecnazene, Tefuryltrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazonemethyl, Thifensulfuron, Thifensulfuronmethyl, Thiobencarb, Tiocarbazil, Topramezone, Tralkoxydim, Triafamone, Triallate, Triasulfuron, Triaziflam, Triazofenamide, Tribenuron, Tribenuronmethyl, Tribufos, Trichloressigsäure (TCA), Tridiphane, Trietazine, Trifloxysulfuron, Trifloxysulfuronnatrium, Trifluralin, Triflusulfuron, Triflusulfuronmethyl, Trimeturon, Trinexapac, Trinexapacethyl, Tritosulfuron, Tsitodef, Uniconazole, Uniconazole-P, Vernolate, ZJ-0862, d. h. 3,4-Dichlor-N-{2-[(4,6-dimethoxypyrimidin-2-yl)oxy]benzyl}anilin, sowie die folgenden Verbindungen:

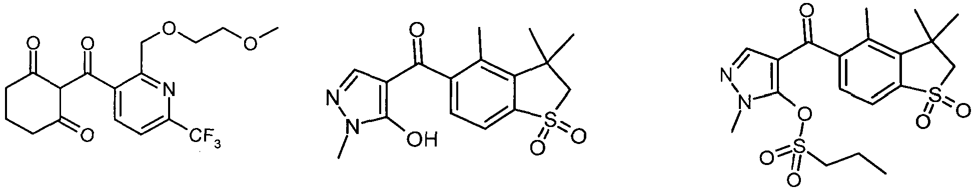

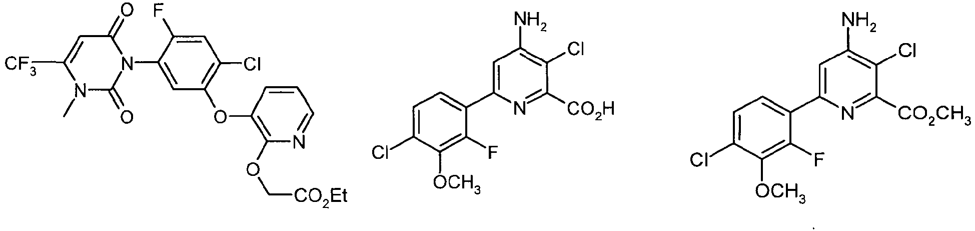

Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dode-morph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des synepimeren Razemates 1 RS,4SR,9RS und des antiempimeren Razemates 1 RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (synepimeres Razemat 1 RS,4SR,9RS), Isopyrazam (synepimeres Enantiomer 1R,4S,9R), Iso-pyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]-amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethyl-phenoxy)methyl]phenyl)-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfe-nazol, Diethofencarb, Ethaboxam, Fluopicolid, Fuberidazol, Pencycuron, Thiabendazol, Thi-ophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasti-cidin-S, Cyprodinil, Kasugamycin, Kasugamycin Hydrochlorid Hydrat, Mepanipyrim, Pyri-methanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flu-morph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, lodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Feno-xanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kirala-xyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfa-mide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl)piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl)piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropyl-methoxy)¬imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}¬piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaph¬thalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dime-thyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valinamid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Alle genannten Fungizide (1) bis (16) können, wenn sie aufgrund ihrer funktionellen Gruppen dazu imstande sind, gegebenenfalls mit geeigneten Basen oder Säuren Salze bilden.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie beispielsweise
   Carbamate, z. B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder
   Organophosphate, z. B. Acephate, Azamethiphos, Azinphosethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphosmethyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise
   Cyclodienorganochlorine, z. B. Chlordane und Endosulfan; oder Phenylpyrazole (Fiprole), z. B. Ethiprole und Fipronil.
(3) Natrium-Kanal-Modulatoren / Spannungsabhängige Natrium-Kanal-Blocker, wie beispielsweise
   Pyrethroide, z. B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)-Isomere)], Tralomethrin und Transfluthrin; oder
   DDT; oder Methoxychlor.
(4) Nikotinerge Acetylcholin-Rezeptor (nAChR) Agonisten, wie beispielsweise Neonikotinoide, z. B. Acetamiprid, Clothianidin, Dinotefuran, Imidacloprid, Nitenpyram, Thiacloprid und Thiamethoxam; oder Nikotin.
(5) Nikotinerge Acetylcholin-Rezeptor (nAChR) allosterische Aktivatoren, wie beispielsweise
   Spinosine, z. B. Spinetoram und Spinosad.
(6) Chlorid-Kanal-Aktivatoren, wie beispielsweise
   Avermectine/Milbemycine, z. B. Abamectin, Emamectin-benzoat, Lepimectin und Milbemectin.
(7) Juvenilhormon-Imitatoren, wie beispielsweise
   Juvenilhormon-Analoge, z. B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise
   Alkylhalide, z. B. Methylbromid und andere Alkylhalide; oder Chloropicrin; oder Sulfurylfluorid; oder Borax; oder Brechweinstein.
(9) Selektive Fraßhemmer, z. B. Pymetrozine; oder Flonicamid.
(10) Milbenwachstumsinhibitoren, z. B. Clofentezine, Hexythiazox und Diflovidazin; oder Etoxazole.
(11) Mikrobielle Disruptoren der Insektendarmmembran, z. B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise
   Diafenthiuron; oder Organozinnverbindungen, z. B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise
   Chlorfenapyr, DNOC und Sulfluramid.
(14) Nikotinerge Acetylcholin-Rezeptor-Antagonisten, wie beispielsweise Bensultap, Cartaphydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise
   Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z. B. Fenazaquin, Fenpyroximate, Pyrimidifen, Pyridaben, Tebufenpyrad und Tolfenpyrad; oder Rotenone (Derris).
(22) Spannungsabhängige Natriumkanal-Blocker, z. B. Indoxacarb; oder Metaflumizone.
(23) Inhibitoren der Acetyl-CoA-Carboxylase, wie
   Tetron- und Tetramsäurederivate, z. B. Spirodiclofen, Spiromesifen und Spirotetramat.
(24) Komplex-IV-Elektronentransportinhibitoren, wie beispielsweise Phosphine, z. B. Aluminiumphosphid, Calciumphosphid, Phosphin und Zinkphosphid; oder Cyanid.
(25) Komplex-II-Elektronentransportinhibitoren, wie Cyenopyrafen.
(26) Ryanodinrezeptor-Effektoren, wie
   Diamide, z. B. Chlorantraniliprole und Flubendiamide.

Weitere Wirkstoffe mit unbekanntem Wirkmechanismus, wie Amidoflumet, Azadirachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und lodmethan; desweiteren Präparate auf Basis von Bacillus firmus (I-1582, BioNeem, Votivo) sowie folgende bekannte wirksame Verbindungen:
3-Brom-N-{2-brom-4-chlor-6-[(1-cyclopropylethyl)carbamoyl]phenyl}-1-(3-chlorpyridin-2-yl)-1H-pyrazol-5-carboxamid (bekannt aus WO2005/077934), 4-{[(6-Brompyrid-3-yl)methyl](2-fluorethyl)amino}furan-2(5H)-on (bekannt aus WO2007/115644), 4-{[(6-Fluorpyrid-3-yl)methyl](2,2-difluorethyl)amino}furan-2(5H)-on (bekannt aus WO2007/115644), 4-{[(2-Chlor-1,3-thiazol-5-yl)methyl](2-fluorethyl)amino}furan-2(5H)-on (bekannt aus WO2007/115644), 4-{[(6-Chlorpyrid-3-yl)methyl](2-fluorethyl)amino}furan-2(5H)-on (bekannt aus WO2007/115644), 4-{[(6-Chlorpyrid-3-yl)methyl](2,2-difluorethyl)amino}furan-2(5H)-on (bekannt aus WO2007/115644), 4-{[(6-Chlor-5-fluorpyrid-3-yl)methyl](methyl)amino}furan-2(5H)-on (bekannt aus WO2007/115643), 4-{[(5,6-Dichlorpyrid-3-yl)methyl](2-fluorethyl)amino}furan-2(5H)-on (bekannt aus WO2007/115646), 4-{[(6-Chlor-5-fluorpyrid-3-yl)methyl](cyclopropyl)amino}furan-2(5H)-on (bekannt aus WO2007/115643), 4-{[(6-Chlorpyrid-3-yl)methyl](cyclopropyl)amino}furan-2(5H)-on (bekannt aus EP-A-0 539 588), 4-{[(6-Chlorpyrid-3-yl)methyl](methyl)amino}furan-2(5H)-on (bekannt aus EP-A-0 539 588), {[1-(6-Chlorpyridin-3-yl)ethyl](methyl)oxido-λ4-sulfanylidenlcyanamid (bekannt aus WO2007/149134) und seine Diastereomere {[(1R)-1-(6-Chlorpyridin-3-yl)ethyl](methyl)oxido-λ4-sulfanyliden}cyanamid (A) und {[(1S)-1-(6-Chlorpyridin-3-yl)ethyl](methyl)oxido-λ4-sulfanyliden}cyanamid (B) (ebenfalls bekannt aus WO2007/149134) sowie Sulfoxaflor (ebenfalls bekannt aus WO2007/149134) und seine Diastereomere [(R)-Methyl(oxido){(1R)-1-[6-(trifluormethyl)pyridin-3-yl]ethyl}-A4-sulfany)iden]λcyanamid (A1) und [(S)-Methyl(oxido){(1S)-1-[6-(trifluormethyl)pyridin-3-yl]ethyl}-λ4-sulfanyliden]cyanamid (A2), bezeichnet als Diastereomerengruppe A (bekannt aus WO 2010/074747, WO 2010/074751), [(R)-Methyl(oxido){(1S)-1-[6-(trifluormethyl)pyridin-3-yl]ethyl}-λ4-sulfanyliden]cyanamid (B1) und [(S)-Methyl(oxido){(1R)-1-[6-(trifluormethyl)pyridin-3-yl]ethyl}-λ4-sulfanyliden]cyanamid (B2), bezeichnet als Diastereomerengruppe B (ebenfalls bekannt aus WO 2010/074747, WO 2010/074751) und 11-(4-Chlor-2,6-dimethylphenyl)-12-hydroxy-1,4-dioxa-9-azadispiro[4.2.4.2]tetradec-11-en-10-on (bekannt aus WO2006/089633), 3-(4'-Fluor-2,4-dimethylbiphenyl-3-yl)-4-hydroxy-8-oxa-1-azaspiro[4.5]dec-3-en-2-on (bekannt aus WO2008/067911), 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a, 12,12a, 12b-decahydro-2H, 11H-benzo[f]pyrano[4,3-b]chromen-4-yl]methylcyclopropancarboxylat (bekannt aus WO2008/066153), 2-Cyan-3-(difluormethoxy)-N,N-dimethylbenzolsulfonamid (bekannt ausWO2006/056433), 2-Cyan-3-(difluormethoxy)-N-methylbenzolsulfonamid (bekannt aus WO2006/100288), 2-Cyan-3-(difluormethoxy)-N-ethylbenzolsulfonamid (bekannt aus WO2005/035486), 4-(Difluormethoxy)-N-ethyl-N-methyl-1,2-benzothiazol-3-amin-1,1-dioxid (bekannt aus WO2007/057407), N-[1-(2,3-Dimethylphenyl)-2-(3,5-dimethylphenyl)ethyl]-4,5-dihydro-1,3-thiazol-2-amin (bekannt aus WO2008/104503), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), (2,2,3,3,4,4,5,5-Octafluorpentyl)(3,3,3-trifluorpropyl)malononitril (bekannt aus WO2005/063094), (2,2,3,3,4,4,5,5-Octafluorpentyl)(3,3,4,4,4-pentafluorbutyl)malononitril (bekannt aus WO2005/063094), 8-[2-(Cyclopropylmethoxy)-4-(trifluormethyl)phenoxy]-3-[6-(trifluormethyl)pyridazin-3-yl]-3-azabicyclo[3.2.1]octan (bekannt aus WO2007/040280), 2-Ethyl-7-methoxy-3-methyl-6-[(2,2,3,3-tetrafluor-2,3-dihydro-1,4-benzodioxin-6-yl)oxy]chinolin-4-yl-methylcarbonat (bekannt aus JP2008/110953), 2-Ethyl-7-methoxy-3-methyl-6-[(2,2,3,3-tetrafluor-2,3-dihydro-1,4-benzodioxin-6-yl)oxy]chinolin-4-ylacetat (bekannt aus JP2008/110953), PF1364 (CAS-Reg.Nr. 1204776-60-2) (bekannt aus JP2010/018586), 5-[5-(3,5-Dichlorphenyl)-5-(trifluormethyl)-4,5-dihydro-1,2-oxazol-3-yl]-2-(1H-1,2,4-triazol-1-yl)benzonitril (bekannt aus WO2007/075459), 5-[5-(2-Chlorpyridin-4-yl)-5-(trifluormethyl)-4,5-dihydro-1,2-oxazol-3-yl]-2-(1H-1,2,4-triazol-1-yl)benzonitril (bekannt aus WO2007/075459), 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid (bekannt aus WO2005/085216), 4-{[(6-Chlorpyridin-3-yl)methyl](cyclopropyl)amino}-1,3-oxazol-2(5H)-on, 4-{[(6-Chlorpyridin-3-yl)methyl]¬(2,2-difluorethyl)amino}-1,3-oxazol-2(5H)-on, 4-{[(6-Chlorpyridin-3-yl)methyl](ethyl)amino}-1,3-oxazol-2(5H)-on, 4-{[(6-Chlorpyridin-3-yl)methyl](methyl)amino}-1,3-oxazol-2(5H)-on (alle bekannt aus WO2010/005692), NNI-0711 (bekannt aus WO2002/096882), 1-Acetyl-N-[4-(1,1,1,3,3,3-hexafluor-2-methoxypropan-2-yl)-3-isobutylphenyl]-N-isobutyryl-3,5-dimethyl-1H-pyrazol-4-carboxamid (bekannt aus WO2002/096882), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-1,2-diethylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin (bekannt aus WO2007/101369), 2-{6-[2-(5-Fluor-pyridin-3-yl)-1,3-thiazol-5-yl]pyridin-2-yl}pyrimidin (bekannt aus WO2010/006713), 2-{6-[2-(Pyridin-3-yl)-1,3-thiazol-5-yl]pyridin-2-yl}pyrimidin (bekannt aus WO2010/006713), 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid (bekannt aus WO2010/069502), 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-1H-tetrazol-1-yl]methyl}-1H-pyrazol-5-carboxamid (bekannt aus WO2010/069502), N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid (bekannt aus WO2010/069502) und (1E)-N-[(6-Chlorpyridin-3-yl)methyl]-N'-cyan-N-(2,2-difluorethyl)ethanimidamid (bekannt aus WO2008/009360).

Die hier mit ihrem "common name" genannten Wirkstoffe sind bekannt und beispielsweise im Pestizidhandbuch ("The Pesticide Manual" 16th Ed., British Crop Protection Council 2012) beschrieben oder im Internet recherchierbar (z. B. http://www.alanwood.net/pesticides).

Als Komponente b) enthalten die erfindungsgemäßen Zusammensetzungen ein oder mehrere N-Alkylglucamide der Formel (I).

Die Herstellung der Alkylglucamide der Formel (I) ist hinlänglich vorbeschrieben und dem Fachmann bekannt (siehe z. B. EPA-A 0 550 637 und EP-A 0 285 768). Sie erfolgt beispielsweise durch Kondensation von Carbonsäureestern mit einem sekundären N-Alkylglucamin, welches seinerseits durch reduktive Aminierung aus einem Zucker wie der bevorzugten D-Glucose hergestellt werden kann.

In dem einen oder den mehreren Alkylglucamiden der Formel (I) steht der Rest R1 vorzugsweise für eine lineare oder verzweigte Alkylgruppe mit 7 bis 9 Kohlenstoffatomen. Der Rest R2 steht bevorzugt für eine Methylgruppe.

Besonders bevorzugt enthalten die erfindungsgemäßen Zusammensetzungen ein Gemisch aus Octyl-N-methylglucamid (R1 = C7-Alkyl, R2 = Methyl) und Decyl-N-methylglucamid (R1 = C9-Alkyl, R2 = Methyl). Der Anteil an Octyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Der Anteil an Decyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Bevorzugt ist auch Nonyl-N-Methylglucamid (R1 = C8-Alkyl, R2 = Methyl, basierend auf Pelargonsäure).

Der Pentahydroxyhexylrest in den Alkylglucamiden der Formel (I) verfügt über verschiedene chirale Zentren, so dass jeweils mehrere Stereoisomere existieren können. Üblicherweise werden die Alkylglucamide der Formel (I) aus natürlich vorkommenden Zuckern, wie der D-Glucose hergestellt, grundsätzlich ist aber auch die Verwendung anderer natürlicher oder synthetischer Hexosen oder anderer C6-Bausteine möglich, so dass unterschiedliche Stereoisomere der Formel (I) resultieren können.

Die erfindungsgemäßen Zusammensetzungen enthalten einen oder mehrere Entschäumer auf Silikonbasis als Komponente c). Erfindungsgemäß eingesetzte Entschäumer sind gewählt aus der Gruppe der linearen Polydimethylsiloxane, wobei das Verhältnis von dynamischer Oberflächenspannung (DYOS in [mN/m]) bei einer Konzentration von 2,0 g/l und einem Oberflächenalter von 20 Millisekunden (ms) in 20 gew.-%igem wässrigen Propylenglykol zu der dynamischen Oberflächenspannung bei gleichen Bedingungen in 20 gew.-%igem wässrigen Dipropylenglykol größer 1,10 ist und das Verhältnis der dynamischen Oberflächenspannung bei einer Konzentration von 2,0 g/l und einem Oberflächenalter von 20 ms in 20 gew.-%igem wässrigen Propylenglykol zu der dynamischen Oberflächenspannung bei einer Konzentration von 10,0 g/l und einem Oberflächenalter von 20 ms in Leitungswasser größer als 1,10 ist.

Entschäumer aus der Gruppe der linearen Polydimethylsiloxane enthalten als chemisches Gerüst eine Verbindung der Formel HO- [Si(CH3)2-O-]n-H, wobei die Endgruppen modifiziert sind, beispielsweise verethert oder in der Regel mit den Gruppen -Si(CH3)3 verbunden.

Erfindungsgemäß geeignete Entschäumer lassen aus den bekannten Handelsprodukten aufgrund der obigen Definition durch wenige einfache Routineversuche ermitteln. Geeignet sind beispielsweise die unter den Bezeichnungen SAG® 1572 (Momentive) und Silfoam® SE3060 (Wacker) vertriebenen Produkte.

Die Entschäumer auf Silikonbasis können auch als Emulsionen eingesetzt werden.

Erfindungsgemäße Entschäumer können in einer Ausführungsform Kieselsäure enthalten. Unter Kieselsäure sind beispielsweise Formen/Modifikationen wie Polykieselsäuren, Metakieselsäure, Orthokieselsäure, Kieselgel, Kieselsäuregele, Kieselgur, gefälltes SiO2 etc. zu verstehen. Der Gehalt an Kieselsäure kann in einem weiten Bereich modifiziert werden und liegt in der Regel im Bereich von 0,1 bis 10 Gewichtsprozent, vorzugsweise 0,2 bis 5 Gew.-%, insbesondere 0,2 bis 2 Gew.-% Kieselsäure, bezogen auf das Gewicht an Polydimethylsiloxan.

Das erfindungsgemäße Verhältnis von dynamischer Oberflächenspannung des Entschäumers bei einer Konzentration von 2,0 g/l und bei 20 ms in 20 Gew.-% Propylenglykol zu der dynamischen Oberflächenspannung bei gleichen Bedingungen in 20 Gew.-% Dipropylenglykol ist größer als 1,10. Die Messung erfolgt bevorzugt bei Raumtemperatur, d.h. im Bereich von 18 bis 24 °C.

Als Wasser wird bevorzugt Leitungswasser mit 15 ° DH (Deutscher Härte), bevorzugt mit einem Mg-Anteil von 16 mg/l und einem Ca-Anteil von 85 mg/l eingesetzt.

Die dynamische Oberflächenspannung wird erfindungsgemäß nach der Blasendruckmethode bestimmt, beispielsweise mit einem Tensiometer BP2100 der Krüss GmbH.

Im Allgemeinen sind die Komponenten a) bis d) in folgenden Mengen in den erfindungsgemäßen Wirkstoff-Zusammensetzungen enthalten:
a) 1 bis 40 Gew.-% an einem oder mehreren in wasserlöslichen agrochemischen Wirkstoffen,
b) 1 bis 80 Gew.-% an einem oder mehreren N-Alkylglucamiden der Formel (I), wie oben angegeben,
c) 0,005 bis 10 Gew.-% an einem oder mehreren erfindungsgemäßen Entschäumern auf Silikonbasis und
d) 0,1 bis 97,995 Gew.-%, vorzugsweise 5 bis 85 Gew.-%, insbesondere 10 bis 60 Gew.-% Wasser.

Das Gewichtsverhältnis der Wirkstoffe a) zu den N-Alkylglucamiden b) liegt im Allgemeinen im Bereich von 1 : 80 bis 40 : 1.

Das Gewichtsverhältnis der Wirkstoffe a) zu dem Entschäumer c) liegt im Allgemeinen im Bereich von 1 : 10 bis 40 : 0,02.

Das Gewichtsverhältnis der N-Alkylglucamide b) zu dem Entschäumer c) liegt im Allgemeinen im Bereich von 1 : 10 bis 80 : 0,02.

Im Allgemeinen beträgt bei den erfindungsgemäßen Wirkstoff-Zusammensetzungen die Gesamtkonzentration der Wirkstoffe der Komponente a) in der Zusammensetzung mehr als 100 g/l, bevorzugt mehr als 200 g/l und besonders bevorzugt mehr als 300 g/l, bezogen auf deren Säureäquivalent.

Im Allgemeinen beträgt bei dem erfindungsgemäßen Wirkstoff-Zusammensetzungen die Gesamtkonzentration der Alkylglucamide der Formel (I) in der Zusammensetzung von 20 bis 250 g/l, bevorzugt von 40 bis 200 g/l und besonders bevorzugt von 50 bis 150 g/l.

Im Allgemeinen beträgt bei der erfindungsgemäßen Wirkstoff-Zusammensetzung die Gesamtkonzentration des Entschäumers c) in der Zusammensetzung 0,05 bis 100 g/l.

In einer weiteren bevorzugten Ausführungsform enthält die erfindungsgemäße Wirkstoff-Zusammensetzung neben den Komponenten a) bis d)
e) gegebenenfalls ein oder mehrere in Wasser unlösliche agrochemische Wirkstoffe;
f) gegebenenfalls einen oder mehrere polare organische Lösungsmittel;
g) gegebenenfalls ein oder mehrere, von der Komponente b) verschiedene, anionaktive, kationaktive, zwitterionische und/oder nichtionogene Tenside, und
h) gegebenenfalls ein oder mehrere, von den Komponenten a) bis g) verschiedene Formulierungshilfsmittel.

Vorzugsweise besteht die erfindungsgemäße Wirkstoff-Zusammensetzung aus den Komponenten a) bis h).

Weiterhin bevorzugt sind erfindungsgemäße wässrige Wirkstoff-Zusammensetzungen enthaltend
(a) 1 bis 40 Gew.-% an einem oder mehreren in Wasser löslichen Pestiziden,
(b) 1 bis 80 Gew.-% an einem oder mehreren Alkylglucamiden der Formel (I), 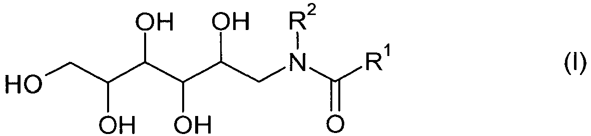 worin
   - R1: für eine lineare oder verzweigte Alkylgruppe mit 5 bis 9 Kohlenstoffatomen steht,
   - R2: für eine Alkylgruppe mit 1 bis 3 Kohlenstoffatomen steht,
(c) 0,005 bis 10 Gew.-% an einem oder mehreren erfindungsgemäßen Entschäumern auf Silikonbasis,
(d) Wasser,
(e) 0 bis 40 Gew.-% an einem oder mehreren in Wasser unlöslichen agrochemischen Wirkstoffen;
(f) 0 bis 50 Gew.-% an einem oder mehreren polaren organischen Lösungsmitteln;
(g) 0 bis 20 Gew.-% an einem oder mehreren von der Komponente b) verschiedenen anionaktiven, kationaktiven, zwitterionischen und/oder nichtionogenen Tensiden und
(h) 0 bis 30 Gew.-% an einem oder mehreren, von den Komponenten a) bis g) verschiedenen Formulierungshilfen.

Als Komponente (e) können die erfindungsgemäßen Wirkstoff-Zusammensetzungen auch Wirkstoffe enthalten, die in Wasser weitgehend unlöslich sind, beispielsweise die oben genannten Herbizide aus der Gruppe der Diphenylether wie Oxyfluorfen, Carbamate, Thiocarbamate, Triphenylzinn- und Tributylzinnverbindungen, Halogenacetanilide, Phenoxyphenoxyalkancarbonsäurederivate sowie Heteroaryloxyphenoxyalkancarbonsäurederivate, wie Chinolyloxy-, Chinoxalyloxy-, Pyridyloxy-, Benzoxalyloxy- und Benzthiazolyloxyphenoxyalkancarbonsäureester, beispielsweise Diclofopmethyl, Fenoxapropethyl oder Fenoxaprop-P-ethyl.

Auch entsprechend unlösliche Wirkstoffe aus Stoffklassen, welche normalerweise Wirkstoffe unterschiedlicher Löslichkeiten enthalten kommen in Frage, z. B. Wirkstoffe aus der Gruppe der Cyclohexandionabkömmlinge, Imidazolinone, Pyrimidyloxypyridincarbonsäurederivate, Pyrimidyloxy-benzoesäure-derivate, Sulfonylharnstoffe, Triazolopyrimidinsulfonamid-derivate sowie S-(N-Aryl-N-alkylcarbamoylmethyl)dithiophosphorsäureester.

Entsprechend können auch Wirkstoffe aus der Gruppe der Safener, Wachstumsregulatoren, Insektizide und Fungizide als Komponente (e) in Frage kommen, bevorzugt die bereits oben aufgeführten.

Die Art der verwendeten Wirkstoffe bestimmen den Typ der Schadorganismen, welche durch die Anwendung der Pestizid-Zusammensetzung bekämpft werden können. Im Falle von Herbiziden sind die Schadorganismen unerwünschte Pflanzen.

Im Zusammenhang der Erfindung bezeichnet der Begriff "polare organische Lösungsmittel" (Komponente (f)) beispielsweise polare protische oder aprotische polare Lösungsmittel und deren Mischungen. Beispiele für Lösungsmittel im Sinne der Erfindung sind aliphatische Alkohole, wie z. B. niedere Alkanole wie Methanol, Ethanol, Propanol, Isopropanol und Butanol, oder mehrwertige Alkohole wie Ethylenglykol, Glycerin, polare Ether wie Tetrahydrofuran (THF), Dioxan, Alkylenglykolmonoalkyether und -dialkylether, wie z. B. Propylenglykolmonomethylether, Propylenglykolmonoethylether, Ethylenglykolmonomethylether oder-monoethylether, Diglyme und Tetraglyme; Amide wie Dimethylformamid (DMF), Dimethylacetamid, Dimethylcaprylamid, Dimethylcaprinamid (Hallcomide) und N-Alkylpyrrolidone; Ketone wie Aceton; Ester auf Basis von Glycerin und Carbonsäuren wie Glycerinmono-, di- und triacetat, Lactame; Kohlensäurediester; Nitrile wie Acetonitril, Propionitril, Butyronitril und Benzonitril; Sulfoxide und Sulfone wie Dimethylsulfoxid (DMSO) und Sulfolan.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle einphasiger wässrig-organischer Lösungen kommen die ganz oder weitgehend wassermischbaren Lösungsmittel oder Lösungsmittelgemische in Frage.

Bevorzugte organische Lösungsmittel im Sinne der Erfindung sind polare organische Lösungsmittel wie N-Methylpyrrolidon und Propylenglykolmonomethylether (z. B. Dowanol® PM).

Die erfindungsgemäßen Zusammensetzungen können als Komponente (g) ein oder mehrere, von der Komponente (b) verschiedene, anionaktive, kationenaktive, zwitterionische oder nichtionogene Tenside enthalten.

Beispiele für anionaktive Tenside sind (wobei EO=Ethylenoxid-Einheiten, PO = Propylenoxid-Einheiten und BO = Butylenoxid-Einheiten bedeuten): g1) Anionische Derivate von Fettalkoholen mit 10 - 24 Kohlenstoffatomen mit 0 - 60 EO und/oder 0 - 20 PO und/oder 0 - 15 BO in beliebiger Reihenfolge in Form von Ethercarboxylaten, Sulfonaten, Sulfaten und Phosphaten und deren anorganischen (z. B. Alkali und Erdalkali) und organischen Salzen (z. B. auf Amin- oder Alkanolaminbasis) wie Genapol#LRO, Sandopan®-Marken, Hostaphat/Hordaphos®-Marken von Clariant; g2) anionische Derivate von Copolymeren bestehend aus EO-, PO- und/oder BO-Einheiten mit einem Molekulargewicht von 400 bis 108 in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis); g3) anionische Derivate von Alkylenoxydaddukten von C1 - C6 Alkoholen in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis); g4) anionische Derivate von Fettsäure-alkoxylaten in Form von Ethercarboxylaten, Sulfonaten, Sulfaten und Phosphaten und deren anorganischen (z. B Alkali und Erdalkali) und organischen Salzen (z. B. auf Amin- oder Alkanolaminbasis); g5) Salze von aliphatischen, cycloaliphatischen und olefinischen Carbonsäuren und Polycarbonsäuren, sowie Alpha-Sulfofettsäureester wie von Henkel erhältlich ; g6) Sulfosuccinate, Alkansulfonate, Paraffin- und Olefinsulfonate wie Netzer IS®, Hoe®S1728, Hostapur®OS, Hostapur®OSAS von Clariant, Triton® GR7ME und GR5 von Union Carbide, Empimin®-Marken von Albright und Wilson, Marlon®PS65 von Condea.

Bevorzugte anionaktive Tenside sind Alkylpolyglykolethersulfate, insbesondere Fettalkoholdiethylenglykolethersulfat (z. B. Genapol LRO®, Clariant), oder Alkylpolyglykolethercarboxylate (z. B. 2-(Isotridecyloxypolyethylenoxy)-ethyl-carboxymethylether, Marlowet 4538®, Hüls)

Die erfindungsgemäßen Pestizid-Zusammensetzungen enthalten gegebenenfalls weitere nichtionogene und/oder kationaktive Tenside als Komponente (g). Beispiele für nichtionogene Tenside (zur Tensidkomponente g) sind: g7) Fettalkohole mit 10-24 Kohlenstoffatomen mit 0-60 EO und/oder 0-20 PO und/oder 0-15 BO in beliebiger Reihenfolge. Beispiele für derartige Verbindungen sind Genapol®C-, L-, O-, T-, UD-, UDD-, X-Marken von Clariant, Plurafac®- und Lutensol® A-, AT-, ON-, TO-Marken von BASF, Marlipa1024 und 013 Marken von Condea, Dehypono-Marken von Henkel, Ethylan®-Marken von Akzo-Nobel wie Ethylan CD 120; g8) Fettsäure- und Triglyceridalkoxylate wie die Serdox®NOG-Marken von Condea oder die Emulsogen-Marken von Clariant; g9) Fettsäureamidalkoxylate wie die Comperlan®-Marken von Henkel oder die Amam®-Marken von Rhodia; g10) Alkylenoxydaddukte von Alkindiolen wie die Surfynol®-Marken von Air Products ; g11) Glukitole von Clariant, g12) Alkylpolyglycoside in Form der APG®-Marken von Henkel; g13) Sorbitanester in Form der Span - oder Tween®-Marken von Uniqema; g14) Cyclodextrinester oderether von Wacker; g15) oberflächenaktive Cellulose- und Algin-, Pektin- und Guarderivate wie die
Tyloseo-Marken von Clariant, die Manute®-Marken von Kelco und Guarderivate von Cesalpina ; g16) Alkylenoxydaddukte auf Polyolbasis wie Polyglykol®-Marken von Clariant; g17) grenzflächenaktive Polyglyceride und deren Derivate von Clariant.

Beispiele für kationaktive Tenside (zur Tensidkomponente g) sind Alkylenoxidaddukte von Fettaminen und entsprechende quartäre AmmoniumVerbindungen mit 8 bis 22 Kohlenstoffatomen wie z. B. die Genamin C-, L-, O-, T-Marken von Clariant.

Möglich sind gegebenenfalls auch oberflächenaktive, zwitterionische Verbindungen wie Tauride, Betaine und Sulfobetaine in Form von Tegotain®-Marken von Goldschmidt, Hostapon® T- und Arkopon®OT-Marken von Clariant (zur Tensidkomponente g).

Übliche Formulierungshilfsmittel (h) sind beispielsweise Inertmaterialien, wie Haft-, Netz-, Dispergier-, Emulgier-, Penetrations-, Farbstoffe, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker). Bevorzugte Formulierungshilfsmittel (h) sind Frostschutzmittel und Verdunstungshemmer wie Glycerin oder Ethylenglykol, z. B. in einer Menge von 2 bis 10 Gew.-% und Konservierungsstoffe, z. B. Mergal K9N® (Riedel) oder Cobate C®, Die Formulierungen können als übliche Formulierungshilfsmittel (h) auch zusätzlich Entschäumer anderer Art als die der Komponente (c) enthalten.

Die zur Herstellung der erfindungsgemäßen Zusammensetzungen notwendigen Hilfsmittel wie insbesondere Tenside sind im Prinzip bekannt und beispielsweise beschrieben in: McCutcheon's "Detergents and Emulsifiers Annual", MC Publ. Corp., Ridgewood N.J. ; and Wood, "Encyclopedia of Surface active Agents", Chem. Publ. Co.Inc., N. Y. 1964 ; "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Die erfindungsgemäßen Zusammensetzungen können nach üblichen Verfahren hergestellt werden, d. h. beispielsweise durch Vermischen der Komponenten unter Rühren, Schütteln oder mittels statischer Mischverfahren. Die erhaltenen flüssigen Formulierungen sind stabil und gut lagerfähig.

Gegenstand der Erfindung sind auch wässrige Adjuvant-Zusammensetzungen, welche zur Herstellung der erfindungsgemäßen konzentrierten Wirkstoff-Zusammensetzung oder zur Herstellung von Tank-Mischungen mit Wirkstoff-Zusammensetzungen verwendet werden können oder auch separat, gleichzeitig oder sequentiell mit der Applikation von Pestiziden oder Düngern (vorzugsweise den genannten Pestiziden (a)) auf die Pflanzen oder auf den Boden, auf oder in dem die Pflanzen heranwachsen, appliziert werden können.

Derartige Adjuvant-Zusammensetzungen sind dadurch gekennzeichnet, dass sie frei sind von agrochemischen Wirkstoffen, insbesondere Pestiziden, und
b) ein oder mehrere erfindungsgemäße Glucamide der Formel (I) und
c) einen oder mehrere erfindungsgemäße Entschäumer auf und
d) Wasser enthalten, sowie
gegebenenfalls polare organische Lösungsmittel (f), gegebenenfalls weitere, von der Komponente b) verschiedene Tenside (h) und gegebenenfalls andere übliche Formulierungshilfsmittel (h) enthalten, wobei die Komponenten (b), (c), (d), (f), (g) und (h) wie im Falle der erfindungsgemäßen Wirkstoff-Zusammensetzungen definiert sind.

Die Wirkstoff enthaltenden Zusammensetzungen und die Adjuvant-Zusammensetzungen sind schaumarm und lagerfähig. Sie weisen in der Regel bei ihrer Anwendung sehr günstige technische Eigenschaften auf.

Beispielsweise zeichnen sich die erfindungsgemäßen Zusammensetzungen durch geringe Schaumneigung bei Verdünnen mit Wasser aus, z. B. bei der Herstellung von Tankmischungen oder bei der Anwendung im Spritzverfahren. Die erfindungsgemäßen Wirkstoff-Zusammensetzungen bzw. die Adjuvant-Zusammensetzungen bei der Anwendung zusammen mit Pestiziden/Pestizidformulierungen weisen außerdem eine vergleichsweise sehr gute biologische Wirkung auf.

Folglich eignen sich die erfindungsgemäßen Wirkstoff-Zusammensetzungen in besonderem Maße zu Anwendungen, bei denen die Mittel auf die Pflanzen, Pflanzenteile oder die Anbaufläche appliziert werden.

Im Falle von Herbiziden a) und/oder e) eignen sich die erfindungsgemäßen Zusammensetzungen sehr gut zur Bekämpfung unerwünschten Pflanzenwuchses sowohl im Nichtkulturland als auch in toleranten Kulturen.

Die Erfindung wird durch die Beispiele näher erläutert, ohne sie dadurch einzuschränken.

### Beispiele

In den folgenden Beispielen beziehen sich Mengenangaben auf das Gewicht, sofern nichts anderes angegeben ist.

Als erfindungsgemäße Glucamide wurden eingesetzt:
GA1: 50 Gew.-% einer Mischung aus 50 bis 70 Gew.-% C8-Glucamid und 30 bis 50 Gew.-% C10-Glucamid, 5 Gew.-% Propylenglykol und 45 Gew.-% Wasser

Als erfindungsgemäße Entschäumer (ES) wurden eingesetzt:
VES1:Tego Antifoam 793 (Evonik) (Vergleichssubstanz)
ES1: Silfoam SE3060 (Wacker)
ES2: SAG 1572 (Momentive)

### Dynamische Oberflächenspannung (DYOS)

Die dynamische Oberflächenspannung wurde über die Blasendruckmethode bestimmt (Tensiometer BP2100, Krüss), bei einer für die Spritzapplikation von Agrochemikalien in wässriger Verdünnung relevanten Zeitspanne (dem sogenannten Oberflächenalter) von 20 Millisekunden.

**Tabelle 1**

| Entschäumer | Konzentration [g/l] | Lösungsmittel | DYOS [mN/m] (20 ms) |
|---|---|---|---|
| VES1 5) | 2,0 | H2O / 20 Gew.-% PG 1) | 40,60 (DYOS1) |
| VES1 5) | 2,0 | H2O / 20 Gew.-% DPG 2) | 39,00 (DYOS2) |
| VES1 5) | 2,0 | H2O 3) | 30,00 (DYOS3) |
| ES1 | 2,0 | H2O /20 Gew.-% PG 1) | 51,50 (DYOS1) |
| ES1 | 2,0 | H2O / 20 Gew.-% DPG 2) | 43,30 (DYOS2) |
| ES1 | 10,0 | H2O 3) | 18,90 (DYOS3) |
| ES2 | 2,0 | H2O / 20 Gew.-% PG 1) | 52,00 (DYOS1) |
| ES2 | 2,0 | H2O / 20 Gew.-% DPG 2) | 42,80 (DYOS2) |
| ES2 | 10,0 | H2O 3) | 36,80 (DYOS3) |

| | | | |
|---|---|---|---|
| 1) PG = Propylenglykol 2) DPG = Dipropylenglykol 3) H2O = Leitungswasser mit 15 ° DH (Deutscher Härte) 5) = VES = Vergleichsentschäumer | | | |

**Tabelle 2 Verhältnis von DYOS1/DYOS2 und DYOS1/DYOS3**

| Entschäumer | DYOS1/DYOS2 | DYOS1/DYOS3 |
|---|---|---|
| VES1 | 1,04 | 1,35 |
| ES1 | 1,20 | 2,72 |
| ES2 | 1,14 | 2,49 |

Erfindungsgemäß sind demnach die Entschäumer ES1 und ES2, bei denen beide Verhältnisse größer als 1,10 sind.

### Schaumverhalten

Zu den wichtigen Eigenschaften grenzflächaktiver Substanzen gehört das Schaumverhalten, insbesondere in wässrigen Systemen. Praktisch alle Tenside schäumen und die Dauer bis zum Zusammenbrechen des Schaumes muss bei kritischen (stark schäumenden) Tensiden durch Zugabe von Entschäumern zu Formulierung oder wässriger Anwendungszubereitung verkürzt werden. Das Schaumverhalten einiger der erfindungsgemäßen Zusammensetzungen wurde mit wässrigen Lösungen bei den angegebenen Konzentrationen nach dem Schaumtest der CIPAC Methode MT42.2 charakterisiert. Die Werte in der Tabelle geben die prozentuelle Füllung mit Schaum in einem Zylinder über einen Zeitraum von 12 Minuten wieder. Ein Wert von 100 (%) bedeutet also maximaler Schaum und wird zum Beispiel über den gesamten Zeitraum von 12 Minuten mit Laurylethersulfaten (wie Genapol LRO) erhalten.

Die nachfolgenden Tabellen zeigen am Beispiel der erfindungsgemäßen Zusammensetzungen, dass das Schaumverhalten als sehr günstig einzustufen ist. Bei für den Einsatz in agrochemischen wässrigen Spritzbrühen typischen bis relativ hohen Konzentrationen bricht der Schaum sehr schnell zusammen.

### Beispiel 1

Schaumtest (* % Schaum bezogen auf das Maximum nach CIPAC MT42.2) bei einer Konzentration von 2.5 % GA1 im Spray (20 ppm und 342 ppm (CIPAC D))

| Schaumtest nach CIPAC MT42.2 2.5 % GA1 | | | | | | |
|---|---|---|---|---|---|---|
| | 20 ppm | | | 342 ppm | | |
| Entschäumer bei x% von GA1 | 1 min | 3 min | 6 min | 1 min | 3min | 6min |
| Kein Entschäumer | 100 | 100 | 100 | 100 | 100 | 100 |
| ES1 (0.1 %) | | | | 10 | 8 | 2 |
| ES1 (0.03 %) | | | | 2 | 1 | 0 |
| ES1 (0.1 %) | | | | > 35 | >35 | >35 |
| ES1 (0.01 %) | | | | > 35 | >35 | >35 |
| ES2 (0.1 %) | 3 | 3 | 3 | 5 | 3 | 1 |
| ES2 (0.03 %) | | | | 13 | 3 | 3 |
| ES2 (0.01 %) | | | | >35 | 24 | 11 |

Bei einer Konzentration von 2.5 % GA1 im Spray ergibt sich ein verbessertes Schaumverhalten bei bestimmten, routinemäßig ermittelten Konzentrationen der Entschäumer gegenüber reinem GA1
1. ES1 bei 0.01 - 0.05 %, bevorzugt 0.03 %
2. ES2 ab 0.02 %, bevorzugt 0.03 %.

### Beispiel 2

Schaumtest nach CIPAC bei einer Konzentration von 1.0 % GA1 im Spray (342 ppm (CIPAC D))

| Schaumtest nach CIPAC 1 % GA1 | | | |
|---|---|---|---|
| | 342 ppm | | |
| Entschäumer | 1 min | 3min | 12 min |
| Kein Entschäumer | >35 | >35 | >35 |
| ES2 (0,03 %) | 7 | 3 | 2 |
| ES1 | 18 | 10 | 6 |
| VES1 | 34 | 34 | 28 |

Bei 1.0 % von GA1 deutlich überlegene Leistung von ES2 bei einer Mindestkonzentration von 0.03% von GA1.)

### Beispiel 3

Schaumtest nach CIPAC bei einer Konzentration von 0.25 % GA1 im Spray (342 ppm (CIPAC D))

Bei dieser Konzentration reduziert ES2 den Schaum schon bei einer Konzentration von 0,01 % (bezogen auf GA1) vollständig.

### Beispiel 4

### Schaumreduktion in elektrolythaltigen Herbizidformulierungen

In einer salzhaltigen Formulierung von GA1 (80 % GA1 und 20 % Ammoniumsulfat) reduziert ES2 den Schaum schon bei einer Konzentration von mindestens 0,01 % (bezogen auf 80 % GA1 und 20 % Ammoniumsulfat) vollständig.

## Patentansprüche

1. Wässrige agrochemische Wirkstoff-Zusammensetzung, enthaltend
(a) ein oder mehrere in Wasser lösliche agrochemische Wirkstoffe,
(b) ein oder mehrere Alkylglucamide der Formel (I), 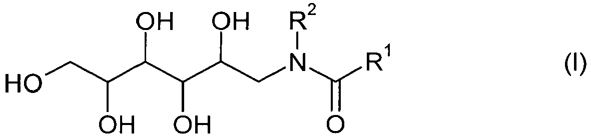 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
(c) einen oder mehrere Entschäumer auf Silikonbasis aus der Gruppe der linearen Polydimethylsiloxane und
(d) Wasser,
wobei für den Entschäumer c) das Verhältnis von dynamischer Oberflächenspannung bei einer Konzentration von 2,0 g/l und einem Oberflächenalter von 20 ms in 20 gew.-%igem wässrigen Propylenglykol zu der dynamischen Oberflächenspannung bei gleichen Bedingungen in 20 gew.-%igem wässrigen Dipropylenglykol größer 1,10 ist und das Verhältnis der dynamischen Oberflächenspannung bei einer Konzentration von 2,0 g/l und einem Oberflächenalter von 20 ms in 20 gew.-%igem wässrigen Propylenglykol zu der dynamischen Oberflächenspannung bei einer Konzentration von 10,0 g/l und einem Oberflächenalter von 20 ms in Leitungswasser größer als 1,10 ist.

2. Zusammensetzung nach Anspruch 1, **dadurch gekennzeichnet, dass** R1 für eine lineare oder verzweigte Alkylgruppe mit 7 bis 9 Kohlenstoffatomen und R2 für eine Methylgruppe steht.

3. Zusammensetzung nach Anspruch 1 oder 2, **dadurch gekennzeichnet, dass** es sich bei dem einen oder mehreren Alkylglucamiden der Formel (I) um ein Gemisch aus Octyl-N-methylglucamid, R1 = C7-Alkyl, und Decyl-N-methylglucamid, R1 = C9-Alkyl, handelt, wobei der Anteil an Octyl-N-methylglucamid 10 bis 90 Gew.-%, vorzugsweise 20 bis 80 Gew.-% und besonders bevorzugt 30 bis 70 Gew.-% und der Anteil an Decyl-N-methylglucamid 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide, beträgt.

4. Zusammensetzung nach einem der Ansprüche 1 bis 3, **dadurch gekennzeichnet, dass** der Anteil des einen oder der mehreren Alkylglucamide der Formel (I)
a) 1 bis 80 Gew.-%, bevorzugt 20 bis 80 Gew.-% und besonders bevorzugt 30 bis 70 Gew.-%, bezogen auf das Gesamtgewicht der Zusammensetzung, beträgt.

5. Zusammensetzung gemäß einem der Ansprüche 1 bis 3, wobei der eine oder die mehreren wasserlöslichen agrochemischen Wirkstoffe der Komponente a) ausgewählt sind aus der Gruppe der Herbizide, bevorzugt aus den wasserlöslichen Salzen von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Mesotrione, NAA, Octansäure, Paraquat, Pelargonsäure, Picloram, Quizalofop, Sulcotrione, 2,3,6-TBA, Tembotrione, Topremazone und Triclopyr.

6. Zusammensetzung gemäß Anspruch 5, wobei der eine oder die mehreren wasserlöslichen Wirkstoffe der Komponente a) ausgewählt sind aus wasserlöslichen Salzen von 2,4-D, Bentazon, Dicamba, Fomesafen, Glyphosat, Glufosinat, MCPA und Paraquat, bevorzugt aus den wasserlöslichen Salzen von Glyphosat.

7. Zusammensetzung nach einem oder mehreren der Ansprüche 1 bis 6, wobei die Zusammensetzung mindestens zwei wasserlösliche agrochemische Wirkstoffe, bevorzugt Pestizide, der Komponente a) enthält.

8. Zusammensetzung gemäß Anspruch 7, wobei die wasserlöslichen Wirkstoffe der Komponente a) Kombinationen der zwei Herbizide Glyphosat und 2,4-D bzw. Glyphosat und Dicamba bzw. Glyphosat und Fomesafen bzw. Glyfosat und Glufosinat bzw. 2,4-D und Dicamba bzw. Glufosinat und 2,4-D oder Glufosinat und Dicamba sind.

9. Zusammensetzung gemäß einem der Ansprüche 1 bis 8, wobei die Gesamtkonzentration der Wirkstoffe der Komponente a) in dem Mittel größer als 100 g/l, bevorzugt größer als 200 g/l und besonders bevorzugt größer als 300 g/l, bezogen auf deren Säureäquivalent, beträgt.

10. Zusammensetzung gemäß einem der Ansprüche 1 bis 9, wobei die Gesamtkonzentration der Alkylglucamide der Formel (I) in dem Mittel von 20 bis 250 g/l, bevorzugt von 40 bis 200 g/l und besonders bevorzugt von 50 bis 150 g/l beträgt.

11. Zusammensetzung gemäß einem der Ansprüche 1 bis 10, wobei die Gesamtkonzentration des Entschäumers c) 0,05 bis 100 g/l beträgt.

12. Zusammensetzung gemäß einem der Ansprüche 1 bis 11, enthaltend neben den Komponenten a) bis d)
e) gegebenenfalls ein oder mehrere in Wasser unlösliche agrochemische Wirkstoffe;
f) gegebenenfalls ein oder mehrere polare organische Lösungsmittel;
g) gegebenenfalls ein oder mehrere, von der Komponente b) verschiedene, anionaktive, kationaktive, zwitterionische und/oder nichtionogene Tenside, und
h) gegebenenfalls ein oder mehrere, von den Komponenten a) bis g) verschiedene Formulierungshilfsmittel.

13. Wässrige agrochemische Adjuvant-Zusammensetzung, die frei ist von agrochemischen Wirkstoffen, enthaltend
A) ein oder mehrere Glucamide der Formel (I) gemäß einem der Ansprüche 1 bis 4 und
B) einen oder mehrere Entschäumer auf Silikonbasis gemäß Anspruch 1.

14. Verfahren zur Bekämpfung von unerwünschtem Pflanzenwuchs, **dadurch gekennzeichnet, dass** man eine wirksame Menge einer Zusammensetzung gemäß einem der Ansprüche 1 bis 12 auf die Pflanzen, Pflanzenteile oder die Anbaufläche appliziert.

15. Verwendung einer Verbindung auf Silikonbasis aus der Gruppe der linearen Polydimethylsiloxane als Entschäumer für flüssige wässrige Formulierungen von wasserlöslichen agrochemischen Wirkstoffen mit einem Gehalt an Alkylglucamiden der Formel (I) gemäß einem der Ansprüche 1 bis 4, wobei für die Verbindung das Verhältnis von dynamischer Oberflächenspannung bei einer Konzentration von 2,0 g/l und einem Oberflächenalter von 20 ms in 20 gew.-%igem wässrigen Propylenglykol zu der dynamischen Oberflächenspannung bei gleichen Bedingungen in 20 gew.-%igem wässrigen Dipropylenglykol größer 1,10 ist und das Verhältnis der dynamischen Oberflächenspannung bei einer Konzentration von 2,0 g/l und einem Oberflächenalter von 20 ms in 20 gew.-%igem Propylenglykol zu der dynamischen Oberflächenspannung bei einer Konzentration von 10,0 g/l und einem Oberflächenalter von 20 ms in Leitungswasser größer als 1,10 ist.

## Claims

1. An aqueous agrochemical active ingredient composition comprising
(a) one or more water-soluble active agrochemical ingredients,
(b) one or more alkylglucamides of the formula (I), 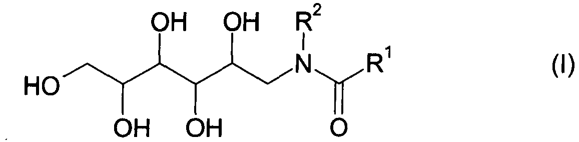 where
R1 is a linear or branched alkyl group having 5 to 9 carbon atoms,
R2 is an alkyl group having 1 to 3 carbon atoms,
(c) one or more silicone-based defoamers from the group of the linear polydimethylsiloxanes, and
(d) water,
where for the defoamer c) the ratio of dynamic surface tension at a concentration of 2.0 g/l and a surface age of 20 ms in 20 wt% strength aqueous propylene glycol to the dynamic surface tension under the same conditions in 20 wt% strength aqueous dipropylene glycol is greater than 1.10 and the ratio of the dynamic surface tension at a concentration of 2.0 g/l and a surface age of 20 ms in 20 wt% strength aqueous propylene glycol to the dynamic surface tension at a concentration of 10.0 g/l and a surface age of 20 ms in mains water is greater than 1.10.

2. A composition as claimed in claim 1, wherein R1 is a linear or branched alkyl group having from 7 to 9 carbon atoms and R2 is a methyl group.

3. A composition as claimed in claim 1 or 2, wherein the one or more alkylglucamides of the formula (I) comprise a mixture of octyl-N methylglucamide, R1 = C7 alkyl, and decyl-N methylglucamide, R1 = C9 alkyl, and the fraction of octyl-N methylglucamide is 10 to 90 wt%, preferably 20 to 80 wt%, and more preferably 30 to 70 wt%, and the fraction of decyl-N-methylglucamide is 10 to 90 wt%, preferably 20 to 80 wt%, and more preferably 30 to 70 wt%, based on the total amount of the alkylglucamides present in this mixture.

4. A composition as claimed in any of claims 1 to 3, wherein the fraction of the one or more alkylglucamides of the formula (I) is
a) 1 to 80 wt%, preferably 20 to 80 wt%, and more preferably 30 to 70 wt%, based on the total weight of the composition.

5. A composition as claimed in any of claims 1 to 3, the one or more water-soluble active agrochemical ingredients of component a) being selected from the group of herbicides, preferably from the water-soluble salts of acifluorfen, aminopyralid, amitrole, asulam, benazolin, bentazone, bialaphos, bispyribac, bromacil, bromoxynil, bicyclopyrone, chloramben, clopyralid, 2,4-D, 2,4-DB, dicamba, dichlorprop, difenzoquat, diquat, endothal, fenoxaprop, flamprop, flumiclorac, fluoroglycofen, fomesafen, fosamine, glufosinate, glyphosate, imizameth, imazamethabenz, imazamox, imazapic, imazapyr, imazaquin, imazethapyr, MCPA, MCPB, mecoprop, mesotrione, NAA, octanoic acid, paraquat, pelargonic acid, picloram, quizalofop, sulcotrione, 2,3,6-TBA, tembotrione, topremazone, and triclopyr.

6. A composition as claimed in claims 5, the one or more water-soluble active ingredients of component a) being selected from water-soluble salts of 2,4-D, bentazone, dicamba, fomesafen, glyphosate, glufosinate, MCPA, and paraquat, preferably from the water-soluble salts of glyphosate.

7. A composition as claimed in one or more of claims 1 to 6, the composition comprising at least two water-soluble active agrochemical ingredients, preferably pesticides, of component a).

8. A composition as claimed in claim 7, the water-soluble active ingredients of component a) being combinations of the two herbicides glyphosate and 2,4-D or glyphosate and dicamba or glyphosate and fomesafen or glyfosate and glufosinate or 2,4-D and dicamba or glufosinate and 2,4-D or glufosinate and dicamba.

9. A composition as claimed in any of claims 1 to 8, the total concentration of the active ingredients of component a) in the composition being greater than 100 g/l, preferably greater than 200 g/l, and more preferably greater than 300 g/l, based on the acid equivalent thereof.

10. A composition as claimed in any of claims 1 to 9, the total concentration of the alkylglucamides of the formula (I) in the composition being from 20 to 250 g/l, preferably from 40 to 200 g/l, and more preferably from 50 to 150 g/l.

11. A composition as claimed in any of claims 1 to 10, the total concentration of the defoamer c) being 0.05 to 100 g/l.

12. A composition as claimed in any of claims 1 to 11, comprising further to components a) to d)
e) optionally one or more water-insoluble active agrochemical ingredients;
f) optionally one or more polar organic solvents;
g) optionally one or more anionic, cationic, zwitterionic and/or nonionic surfactants different from component b), and
h) optionally one or more formulating assistants different from components a) to g).

13. An aqueous agrochemical adjuvant composition which is free from active agrochemical ingredients, comprising
A) one or more glucamides of the formula (I) as set forth in any of claims 1 to 4 and
B) one or more silicone-based defoamers as set forth in claim 1.

14. A method for controlling unwanted plant growth, which comprises applying an effective amount of a composition as claimed in any of claims 1 to 12 to the plants, parts of plants, or the area under cultivation.

15. The use of a silicone-based compound from the group of the linear polydimethylsiloxanes as defoamer for liquid aqueous formulations of water-soluble active agrochemical ingredients comprising alkylglucamides of the formula (I) as set forth in any of claims 1 to 4,
where for the compound the ratio of dynamic surface tension at a concentration of 2.0 g/l and a surface age of 20 ms in 20 wt% strength aqueous propylene glycol to the dynamic surface tension under the same conditions in 20 wt% strength aqueous dipropylene glycol is greater than 1.10 and the ratio of the dynamic surface tension at a concentration of 2.0 g/l and a surface age of 20 ms in 20 wt% strength propylene glycol to the dynamic surface tension at a concentration of 10.0 g/l and a surface age of 20 ms in mains water is greater than 1.10.

## Revendications

1. Composition aqueuse de substances actives agrochimiques, contenant
(a) une ou plusieurs substances actives agrochimiques solubles dans l'eau,
(b) un ou plusieurs alkylglucamides de formule (I), 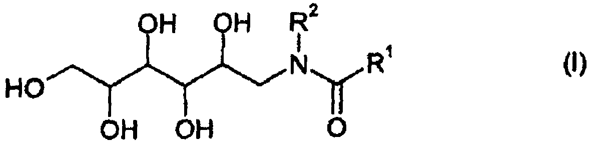 dans laquelle
R¹ représente un groupe alkyle linéaire ou ramifié ayant de 5 à 9 atomes de carbone,
R² représente un groupe alkyle ayant de 1 à 3 atomes de carbone,
(c) un ou plusieurs antimousses à base de silicone, choisi(s) dans le groupe des polydiméthylsiloxanes linéaires et
(d) de l'eau,
en ce qui concerne l'antimousse c) le rapport de la tension superficielle dynamique pour une concentration de 2,0 g/l et un âge de surface de 20 ms, dans une solution aqueuse de propylèneglycol à 20 % en poids, à la tension superficielle dynamique dans les mêmes conditions dans une solution aqueuse de dipropylèneglycol à 20 % en poids est supérieur à 1,10 et le rapport de la tension superficielle dynamique pour une concentration de 2,0 g/l et un âge de surface de 20 ms, dans une solution aqueuse de propylèneglycol à 20 % en poids, à la tension superficielle dynamique pour une concentration de 10,0 g/l et un âge de surface de 20 ms dans de l'eau de la canalisation est supérieur à 1,10.

2. Composition selon la revendication 1, **caractérisée en ce que** R¹ représente un groupe alkyle linéaire ou ramifié ayant de 7 à 9 atomes de carbone et R² représente un groupe méthyle.

3. Composition selon la revendication 1 ou 2, **caractérisée en ce que** pour ce qui est dudit un ou desdits plusieurs alkylglucamides de formule (I) il s'agit d'un mélange d'octyl-N-méthylglucamide, R¹ = alkyle en C₇, et de décyl-N-méthylglucamide, R¹ = alkyle en C₉, la proportion d'octyl-N-méthylglucamide valant de 10 à 90 % en poids, de préférence de 20 à 80 % en poids et de façon particulièrement préférée de 30 à 70 % en poids et la proportion de décyl-N-méthylglucamide valant de 10 à 90 % en poids, de préférence de 20 à 80 % en poids et de façon particulièrement préférée de 30 à 70 % en poids, par rapport à la quantité totale des alkylglucamides contenus dans ce mélange.

4. Composition selon l'une quelconque des revendications 1 à 3, **caractérisée en ce que** la proportion dudit un ou desdits plusieurs alkylglucamides de formule (I)
a) vaut de 1 à 80 % en poids, de préférence de 20 à 80 % en poids et de façon particulièrement préférée de 30 à 70 % en poids, par rapport au poids total de la composition.

5. Composition selon l'une quelconque des revendications 1 à 3, dans laquelle ladite une ou lesdites plusieurs substances actives agrochimiques hydrosolubles du composant a) sont choisies dans le groupe des herbicides, de préférence parmi les sels hydrosolubles d'acifluorfène, aminopyralide, amitrol, asulame, bénazoline, bentazone, bialaphos, bispyribac, bromacil, bromoxynil, bicyclopyrone, chlorambène, clopyralide, 2,4-D, 2,4-DB, dicamba, dichlorprop, difenzoquat, diquat, endothal, fénoxaprop, flamprop, flumiclorac, fluoroglycofène, fomésafène, fosamine, glufosinate, glyphosate, imizameth, imazaméthabenz, imazamox, imazapic, imazapyr, imazaquine, imazéthapyr, MCPA, MCPB, mécoprop, mésotrione, NAA, acide octanoïque, paraquat, acide pélargonique, piclorame, quizalofop, sulcotrione, 2,3,6-TBA, tembotrione, topramézone et triclopyr.

6. Composition selon la revendication 5, dans laquelle ladite une ou lesdites plusieurs substances actives hydrosolubles du composant a) sont choisies parmi les sels hydrosolubles de 2,4-D, bentazone, dicamba, fomésafène, glyphosate, glufosinate, MCPA et paraquat, de préférence parmi les sels hydrosolubles de glyphosate.

7. Composition selon une ou plusieurs des revendications 1 à 6, la composition contenant au moins deux substances actives agrochimiques hydrosolubles, de préférence des pesticides, du composant a).

8. Composition selon la revendication 7, dans laquelle les substances actives hydrosolubles du composant a) sont des associations des deux herbicides glyphosate et 2,4-D ou glyphosate et dicamba ou glyphosate et fomésafène ou glyphosate et glufosinate ou 2,4-D et dicamba ou glufosinate et 2,4-D ou glufosinate et dicamba.

9. Composition selon l'une quelconque des revendications 1 à 8, dans laquelle la concentration totale des substances actives du composant a) est en moyenne supérieure à 100 g/l, de préférence supérieure à 200 g/l et de façon particulièrement préférée supérieure à 300 g/l, sur la base de leur équivalent d'acide.

10. Composition selon l'une quelconque des revendications 1 à 9, dans laquelle la concentration totale des alkylglucamides de formule (I) vaut en moyenne de 20 à 250 g/l, de préférence de 40 à 200 g/l et de façon particulièrement préférée de 50 à 150 g/l.

11. Composition selon l'une quelconque des revendications 1 à 10, dans laquelle la concentration totale de l'antimousse c) vaut de 0,05 à 100 g/l.

12. Composition selon l'une quelconque des revendications 1 à 11, contenant en plus des composants a) à d)
e) éventuellement une ou plusieurs substances actives agrochimiques insolubles dans l'eau ;
f) éventuellement un ou plusieurs solvants organiques polaires ;
g) éventuellement un ou plusieurs tensioactifs anioniques, cationiques, zwitterioniques et/ou non ionogènes, différents du composant b), et
h) éventuellement un ou plusieurs adjuvants de formulation différents des composants a) à g).

13. Composition aqueuse agrochimique d'adjuvants, qui est exempte de substances actives agrochimiques, contenant
A) un ou plusieurs glucamides de formule (I) selon l'une quelconque des revendications 1 à 4 et
B) un ou plusieurs antimousses à base de silicone selon la revendication 1.

14. Procédé pour la lutte contre une végétation indésirable, **caractérisé en ce qu'**on applique sur les plantes, des parties de plantes ou la surface cultivée une quantité efficace d'une composition selon l'une quelconque des revendications 1 à 12.

15. Utilisation d'un composé à base de silicone, choisi dans le groupe des polydiméthylsiloxanes linéaires, en tant qu'antimousse pour des formulations aqueuses liquides de substances actives agrochimiques hydrosolubles ayant une teneur en alkylglucamides de formule (I) selon l'une quelconque des revendications 1 à 4, dans laquelle en ce qui concerne le composé le rapport de la tension superficielle dynamique pour une concentration de 2,0 g/l et un âge de surface de 20 ms, dans une solution aqueuse de propylèneglycol à 20 % en poids, à la tension superficielle dynamique dans les mêmes conditions dans une solution aqueuse de dipropylèneglycol à 20 % en poids est supérieur à 1,10 et le rapport de la tension superficielle dynamique pour une concentration de 2,0 g/l et un âge de surface de 20 ms, dans une solution aqueuse de propylèneglycol à 20 % en poids, à la tension superficielle dynamique pour une concentration de 10,0 g/l et un âge de surface de 20 ms, dans de l'eau de la canalisation est supérieur à 1,10.
